# EUROPEAN PATENT SPECIFICATION

(11) **EP 1 343 293 B1**
(45) Date of publication and mention of the grant of the patent: **10.01.2007**
(21) Application number: 03250981.2
(22) Date of filing: 18.02.2003
(51) Int. Cl.: H04L 29/06, H04L 12/28

(54) **Provision of free internet access for customers purchasing merchandise**
Bereitstellung des freien Internet-Zuganges für die Kunden, die Waren kaufen
Fourniture d'accès libre d'Internet pour des clients achetant des marchandises

(30) Priority: 21.02.2002 JP 2002045406; 12.02.2003 JP 2003033741
(43) Date of publication of application: 10.09.2003
(73) Proprietor: SEIKO EPSON CORPORATION, Shinjuku-ku, Tokyo 163-0811 (JP)
(72) Inventor: Nagasaka, Fumio, Suwa-shi, Nagano-ken 392-8502 (JP); Takeuchi, Yuichi, Suwa-shi, Nagano-ken 392-8502 (JP)
(74) Representative: Sturt, Clifford Mark

(56) References cited:
- EP-A- 1 137 234
- WO-A-01/43416
- US-A- 5 933 811

## Description

### BACKGROUND OF THE INVENTION

### 1. Field of the Invention

The present invention relates to a terminal connection service system providing a marquee environment that enables customers to readily use the Internet in shops, outlets, and other commercial facilities, as well as to a computer program for such terminal connection service, a method of such terminal connection service, a communication terminal used for such terminal connection service, a computer program used for the communication terminal, and a method of connecting the communication terminal.

### 2. Description of the Related Art

The Internet and electronic mails are now essential tools for the daily life of many people. Various pieces of information including advertisement and public relations of commodities are open to the public via the Internet. Electronic commerce for sales and purchase of commodities at Internet malls is also popular these days. The use of the Internet is not limited to the home or the office. Many users of the Internet carry mobile computers, personal digital assistances, and other communication terminals and gain access to the Internet at any desired locations to browse the required contents and send and receive e-mails.

Under such circumstances, various shops, outlets, and commercial facilities including restaurant, coffee shops, convenience stores, and book stores provide the Internet connection service.

The prior art technique, however, has some drawbacks. At the shop or commercial facility that provides the charged Internet connection service, one popular system allows the customer to use a computer owned by the shop at a preset time charge. Another popular system provides a network and allows the customer to utilize the network at a preset time charge and gain access to the Internet from a notebook computer, a mobile computer or a communication terminal owned by the customer.

The customers of the shop or commercial facility providing such service are those who want to use the Internet outside the home or the office. The main users of the prior art system that provides the time-charged Internet connection service are, however, only the people having some purposes to use the Internet. It is accordingly rather difficult to extend the market of such charged Internet connection service. There is a good possibility that many customers choose coffee shops providing the free Internet connection service, such as Internet cafes. The free Internet connection service is marquee but worsens the rotation of customers, since each customer stays a long time to use the Internet.

EP 1137234 discloses an Internet access arrangement in which a client computer can be connected to a network by a network access arrangement allocating a network address to the client computer.

US 5933811 discloses a system and method for delivering customised advertisements within interactive communication systems. The customised advertisements are selected based on consumer profiles and are then integrated with offerings maintained by different content providers.

WO 01/43416 discloses a host-sponsored data transmission billing system and method provided to permit reduced costs to a mobile user for Internet access through an Internet gateway.

US 5774869 discloses a method for providing sponsor paid Internet access and simultaneous sponsor promotion.

### SUMMARY OF THE INVENTION

The object of the present invention is thus to provide a terminal connection service system that ensures commercial effects by providing each customer with the Internet connection service, as well as a computer program for such terminal connection service, a method of such terminal connection service, a communication terminal used for such terminal connection service, a computer program used for the communication terminal, and a method of connecting the communication terminal.

According to a first aspect of the present invention, there is provided a terminal connection service system as defined in claim 1.

The function of the Internet service provider here represents the function of providing an access point to establish connection of the communication terminal to the Internet. The local server may have any additional functions according to the requirements. The network is managed by the local server and may be a wired network or a wireless network. Multiple communication terminals are connectable with the general network connection environment, the local server, instead of the communication terminal, forcibly specifies the Internet connection setting window as the initial window. The Internet connection setting window may include advertisement. The specified Internet connection setting window is bound to be displayed on the communication terminal, prior to connection with the Internet. This arrangement ensures advertisement effects. The arrangement of the first terminal connection service system enables the administrator of the local server to freely update the Internet connection setting window.

The present invention is also directed to a second terminal connection service system that provides a service of connecting a communication terminal to the Internet. The second terminal connection service system includes a local server that is connected with a base station of a wireless network, has a function of an Internet service provider, and delivers a specified Internet connection setting window as an initial window to a communication terminal, which enters a coverage zone of the base station.

The wireless network is not limited but may be any suitable network. The base station of the wireless network transmits a broadcast packet to a specific area about the base station and catches the radio wave of the communication terminal. The base station automatically detects the presence of each communication terminal in the specific area and establishes connection of the communication terminal with the wireless network. The local server may be connected with one or multiple base stations. The local server is connected via the base station with the communication terminal caught by the base station, and functions as an Internet service provider. The local server delivers a specified Internet connection setting window to the communication terminal. The layout, the design, and the functions of the Internet connection setting window may be identical with those in the first terminal connection service system.

In accordance with one preferable application of the second terminal connection service system, the base station of the wireless network is provided in each shop, and the local server is connected with a communication terminal placed in an area of the shop via the base station in the shop and specifies an original Internet connection setting window for the shop.

The principle of the invention is applicable to any shops, outlets, and commercial facilities. Specification of the original Internet connection setting window for each shop ensures unique advertisement and public relations activities for the shop. It is not necessary that different Internet connection setting windows are specified for the respective shops. Multiple shops may use a common Internet connection setting window according to the requirements.

In either of the first terminal connection service system and the second terminal connection service system, the Internet connection setting window may include specific advertisement information.

The advertisement information included in the Internet connection setting window may be ads of the own shop or any other ads.

In either of the first terminal connection service system and the second terminal connection service system, the Internet connection setting window may be a menu window for ordering commercial items.

Inclusion of the menu window for ordering commercial items in the Internet connection setting window does not require any paper menu to be provided at each table in restaurants and coffee shops.

Input of a terminal identification code and a password is generally required to gain access to the Internet. In response to an order of any commercial item included in the menu window, the setting for access to the Internet is completed manually or automatically. The customer may operate the own communication terminal to gain access to the Internet. Alternatively a worker in a shop, for example, may operate another terminal device to complete the setting for access to the Internet.

In the first terminal connection service system or the second terminal connection service system of the above embodiment, the Internet connection setting window may include an operation element to gain access to the Internet.

The operation element may be an access button included in the Internet connection setting window or any means of inputting a terminal identification number occasionally issued.

The terminal connection service system sets a certain time frame and controls the customer's use of the Internet. This speeds up the rotation of customers. Cancellation of the access may be controlled in the local server or in the communication terminal.

In the first terminal connection service system or the second terminal connection service system of the above preferable arrangement, the time of automatically cancelling the access of the communication terminal to the Internet depends upon a value of a purchased commercial item.

The arrangement of giving permission for the access to the Internet for the longer time corresponding to the higher value of the purchased commercial item has the promotional effects.

The technique of the present invention may be actualized by a local server, in addition to the terminal connection service system and the communication terminal discussed above. The principle of the invention is also attained by a method of terminal connection service and a method of connecting a communication terminal. There are a variety of other applications of the present invention. Some examples include computer programs for constructing the terminal connection service system, the communication terminal, the local server, and the corresponding methods, recording media in which such computer programs are recorded, and data signals that include such computer programs and are embodied in carrier waves.

The above and other objects, features, aspects, and advantages of the present invention will become more apparent from the following detailed description of the preferred embodiment with the accompanying drawings.

### BRIEF DESCRIPTION OF THE DRAWINGS

Fig. 1 is a block diagram showing a system of actualizing the method of terminal connection service in one embodiment of the present invention;
Fig. 2 is a perspective view showing a layout of a coffee shop to substantialize the system of Fig. 1;
Fig. 3 is a flowchart showing a series of processing executed by an order processing module and an Internet connection setting module included in the system of Fig. 1;
Fig. 4 shows windows successively opening on an Internet connection setting window displayed on the communication terminal;
Fig. 5 shows the functions of a local server;
Fig. 6 is a block diagram showing the internal structure of a communication terminal; and
Fig. 7 shows a method of causing a Web page of the local server to be displayed as an initial window on the communication terminal.

### DESCRIPTION OF THE PREFERRED EMBODIMENTS

One mode of carrying out the invention is discussed below as a preferred embodiment.

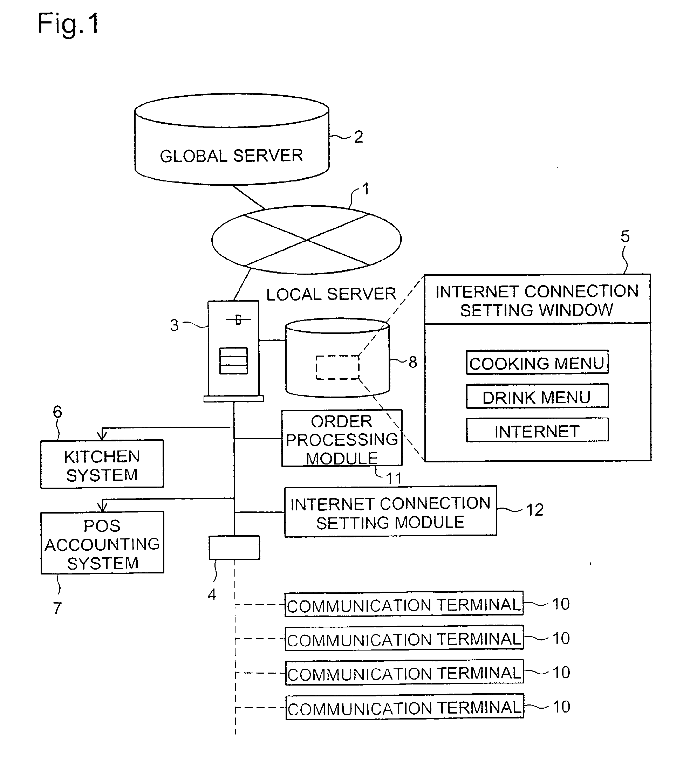

Fig. 1 is a block diagram showing a system of actualizing the method of terminal connection service in one embodiment of the present invention.

The system includes a network 1, which is a wide area network like the Internet. A global server 2 and a local server 3 are connected to this network 1. The global server 2 supplies a variety of contents, and each of multiple communication terminals 10 is used to browse the variety of contents via the network 1. The local server 3 is located, for example, in a coffee shop, and is constructed to connect with the multiple communication terminals 10 via a base station 4. A storage device 8 connected to the local server 3 stores a variety of original Web pages of the coffee shop, such as an Internet connection setting window 5 (discussed later). The local server 3 is further connected with a kitchen system 6 and a POS accounting system 7 in the coffee shop.

The local server 3 is set to exert the functions of an order processing module 11 and an Internet connection setting module 12. Both the order processing module 11 and the Internet connection setting module 12 are computer programs working on the local server 3. The order processing module 11 is a computer program having the functions of processing a customer's order for a commercial item received and accepted through the customer's operations of the communication terminal 10 and transmitting the processed order to the kitchen system 6 and the POS accounting system 7. The Internet connection setting module 12 is a computer program having the functions of executing a preset series of processing to give access to the internet in response to an access requirement to the Internet through the customer's operations of the communication terminal 10. A menu of commercial items provided by the coffee shop is shown in Fig. 1 as an example of the Internet connection setting window 5.

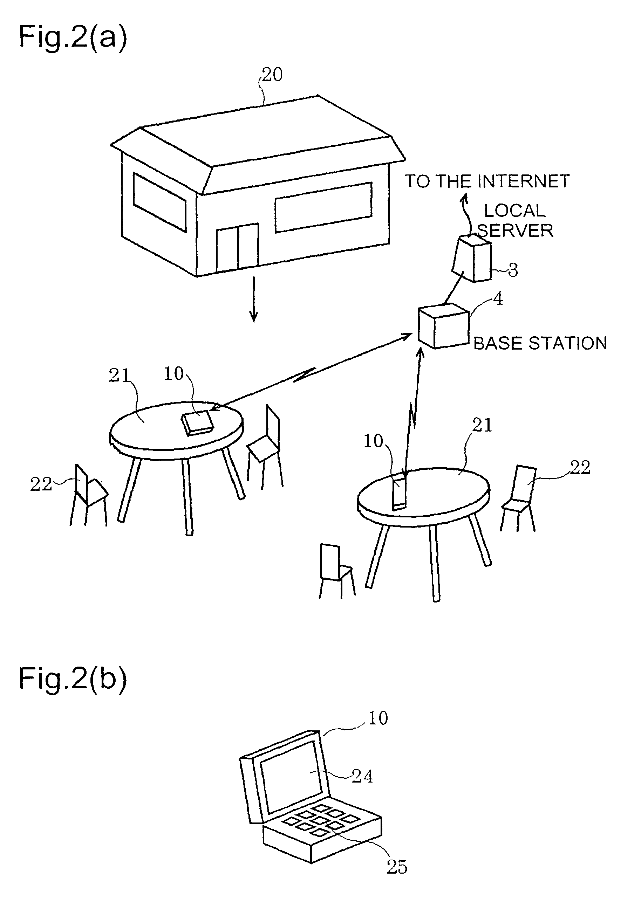

Fig. 2 is a perspective view showing a layout of a coffee shop 20 to substantialize the system of Fig. 1.

For example, multiple tables 21 and multiple chairs 22 are laid out in the coffee shop 20 as shown in Fig. 2(a). Each customer at the table 21 places the customer's own communication terminal 10 on the table 21. The base station 4 connecting with the local server 3 catches the radio wave transmitted from the communication terminal 10 and connects the communication terminal 10 with the local server 3. The diversity of contents including the Internet connection setting window 5 provided by the local server 3 are accordingly delivered to the communication terminal 10. The communication terminal 10 may be an electronic databook, a cell phone, a mobile computer, or any other suitable personal digital assistance and has a display 24 and a keyboard 25 as shown in Fig. 2(b). The customer operates a mobile browser installed in the communication terminal 10 to gain access to the Internet.

In the system of the embodiment, the base station 4 may be located in the coffee shop 20. Each customer of the coffee shop 20 may gain access to and freely use the Internet via the local server 3 in the coffee shop 20. The coffee shop 20 automatically provides the free Internet connection service. A certain Web page specified by the local server 3 is bound to be displayed as an initial window on the browser of the communication terminal 10. In the example of Fig. 1, a Web page of the Internet connection setting window 5 is displayed on the screen. This Web page includes, for example, menus and advertisements of the coffee shop 20. The Web page may include banner ads of sponsors, if any.

The method of ensuring display of a certain Web page specified by the local server 3 as the initial window on the browser of the communication terminal 10 will be discussed later in detail.

The local server 3 in the coffee shop 20 may allow the customer to gain access to the Internet, only when the customer gives an order for a dish or a drink. One possible application effectuates an access button on the Internet connection setting window, in response to the customer's order for or purchase of a specified commercial item. This arrangement enables the customer to gain access to the Internet without showing the customer a connection ID code and a password. Active server pages (ASP) on the local server 3 may carry out a required series of processing for such settings. The order for a commercial item may be made through operations similar to those of electronic commerce at Internet Web sites. Various ads are displayed in the course of the customer's operations to order the commercial item. This ensures the enhanced advertisement effects.

The system of the embodiment may utilize the international standard IEEE 802.11b/g for wireless networks. The wireless network uses the radio wave in a frequency band of 2.4 GHz (ISM band) and allows communication at a rate of 11 Mbps between multiple terminals apart from each other by a distance of 50 to 100 m. When the communication terminal 10 in stand-by state enters a coverage zone of 45 m in radius about the base station 4, the communication terminal 10 is automatically connected to the local server 3, which manages the base station 4. This local server 3 functions as an ISP (Internet Service Provider). In a TCP/IP protocol, DHCP (dynamic host configuration protocol), an IP address and a default gateway address are registered in a DHCP server. The communication terminal 10 as a client gains access to the DHCP server and acquires the registered IP address. This establishes automatic connection of the communication terminal 10 with the base station 4.

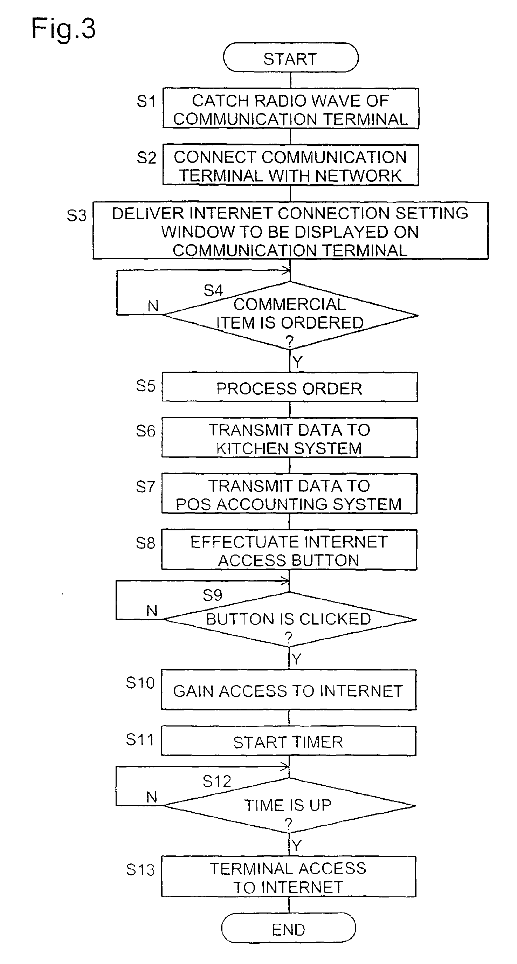

The series of processing executed by the order processing module 11 and the Internet connection setting module 12 included in the system of Fig. 1 is discussed more in detail with reference to the flowchart of Fig. 3.

The base station 4 catches the radio wave transmitted from the communication terminal 10 at step S1, and connects the communication terminal 10 to a network at step S2. The network is established in the coffee shop managed by the local server 3. The local server 3 delivers the Internet connection setting window 5 to the communication terminal 10 and makes the delivered Internet connection setting window 5 displayed on the communication terminal 10 at step S3. An example of the Internet connection setting window includes a cooking menu and a drink menu.

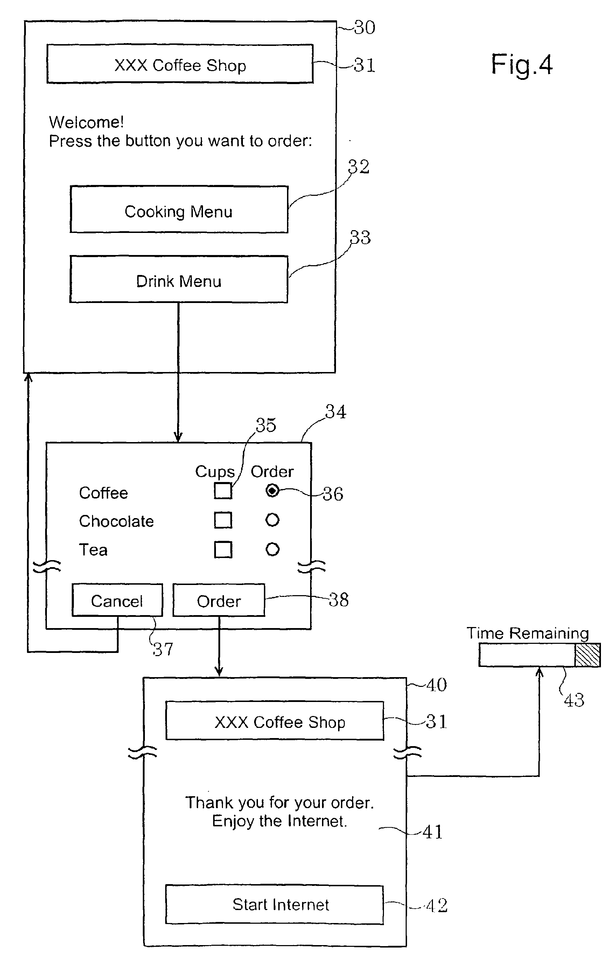

Fig. 4 shows windows successively opening on the Internet connection setting window 5 displayed on the communication terminal 10.

A first window 30 appearing on the communication terminal 10 includes, for example, a box 31 representing the name of the coffee shop and buttons 32 and 33 for displaying menus. In response to a click of the button 33, a window 34 including a drink menu is open. The window 34 includes the drink menu, text boxes 35 to input the number of orders, and option buttons 36 to specify the drink to be ordered.

A Cancel button 37 and an Order button 38 are shown on the bottom of the window 34. The display returns to the first window 30 in response to a click of the Cancel button 37. When the customer inputs the number of orders and specifies the drink to be ordered and clicks the Order button 38, the display shifts to an Internet access window 40.

Referring back to the flowchart of Fig. 3, when it is determined at step S4 that a commercial item has been ordered, the order processing module 11 is activated. The order processing module 11 acquires a code allocated to the selected commercial item at step S5, transmits the order to the kitchen system 6 at step S6, and requests the POS accounting system 7 to issue an accounting slip at step S7. On completion of the order for the selected commercial item, the Internet connection setting module 12 effectuates the function of an Internet Access button 42 at step S8. The Internet access window 40 is accordingly displayed in response to the click of the Order button 38 as shown in Fig. 4.

The window 40 includes the Internet Access button 42. In response to a click of the Internet Access button 42, connection of the communication terminal 10 with the Internet is established. According to the concrete procedure, the Internet connection setting module 12 detects a click of the button at step S9 and establishes connection with the network 1, which provides the Internet environment, at step S10. On the establishment of the connection, a timer starts counting at step S11. The timer is a program timer and is built in the Internet connection setting module 12.

The rule may be set, for example, to allow the access to the Internet for 30 minutes, in response to each order of a commercial item. This arrangement effectively prevents the rotation of customers from being worsened by the Internet connection service. When the timer starts counting, a remaining time 43 is shown at a corner of the window 40 as shown in Fig. 4.

The customer can thus check the remaining time available for the access to the Internet. At step S12, the time-up on the counting timer is monitored. When the time is up, the Internet connection setting module 12 terminates the access to the Internet at step S13.

According to the above series of processing, the coffee shop asks the customer to purchase a commercial item on the menu window provided in the local server 3 and gives the customer permission of the access to the Internet for a preset time period in return for purchase of the commercial item. One preferable arrangement determines the accessible time to the Internet corresponding to the value of the purchased commercial item. For example, the accessible time is 30 minutes for the purchased value of less than 1000 thousand yen and 1 hour for the purchased value of 1000 to 2000 thousand yen. This arrangement further promotes sales of commercial items. The local server 3 may provide the communication terminal 10 with a diversity of contents stored in the storage device 8 for the enhanced advertising effects.

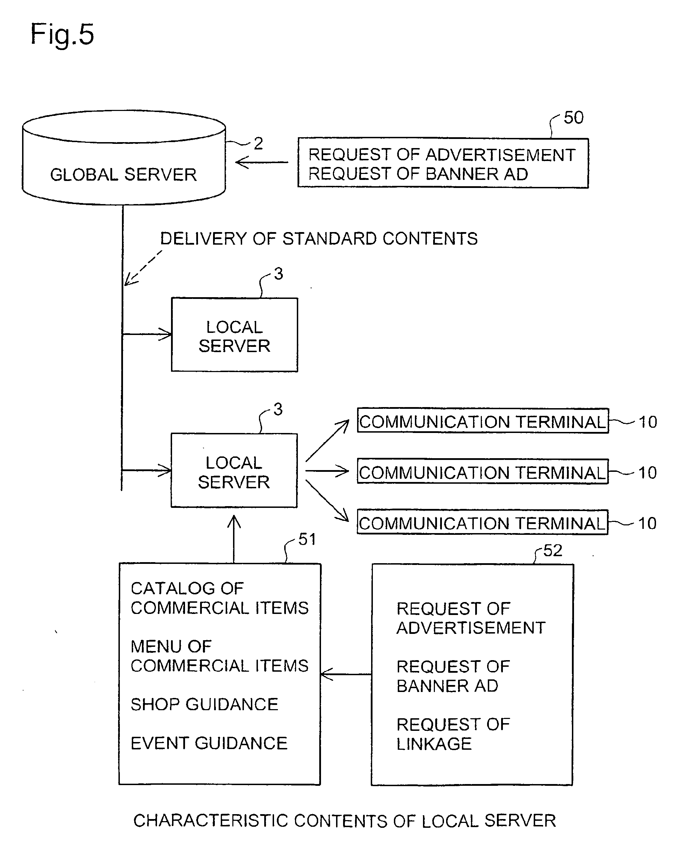

Fig. 5 shows the functions of the local server 3.

The global server 2 stores a diversity of general contents, which are browsed by the communication terminals via the Internet. The global server 2 accepts requests 50 for advertisement and banner ads and incorporates advertising statements and images in the Web pages. These Web pages are delivered as the general contents to each of the local servers 3.

The local server 3 stores original contents 51 including the Internet connecting setting window 5 discussed previously and a diversity of Web pages for advertisement. The contents 51 may include a catalog of commercial items or a menu of commercial items, which can be purchased or ordered in the shop having the local server 3. In the case of a department store, the contents 51 may further include a Web page for shop guidance and event guidance. The local server 3 may carry out the control to forcibly display specified Web pages in succession on the communication terminal 10. For example, while the customer drinks or eats, the contents specified by the local server 3 are automatically delivered to the communication terminal 10 in succession.

Information 52 is externally added to the original contents 51 stored in the local server 3. The information 52 may include requests for advertisement, banner ads, and linkage from third parties. Inclusion of such information 52 in the contents 51 generates additional revenue for the advertisement. In the structure of the illustrated example, one local server 3 is connected to the network 1, and one base station 4 is connected to the local server 3.

Multiple base stations 4 may, however, be connected to one local server 1. For example, in a department store having one local server, a base station is located on each floor. The communication terminal 10 may be any computer, personal digital assistance, or another mobile electronic device owned by the customer or by the shop.

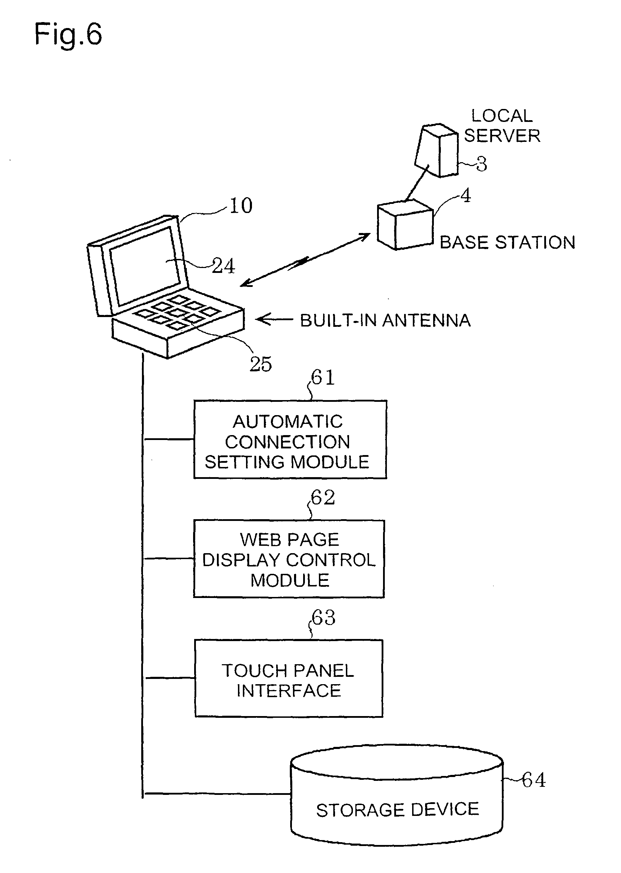

Fig. 6 is a block diagram showing the internal structure of the communication terminal 10. The communication terminal 10 has, for example, the appearance shown in Fig. 2 and includes an automatic connection setting module 61, a Web page display control module 62, a touch panel interface 63, and a storage device 64. The automatic connection setting module 61 and the Web page display control module 62 are computer programs installed in the communication terminal 10. When the communication terminal enters the coverage zone of the base station 4 as discussed above with reference to Fig. 2, the automatic connection setting module 61 receives the broadcast signal from the base station 4 via a built-in antenna of the communication terminal 10. The automatic connection setting module 61 carries out a communication protocol, which is similar to that used in cell phones, and establishes wireless connection of the communication terminal 10 with the local server 3. In the preferable arrangement, an IP address is automatically allocated to the communication terminal 10 to complete the setting for access to the Internet via the local server 3. The communication terminal 10 receives the initial window from the local server 3. The Web page display control module 62 is a browser and displays the received initial window to allow the customer to order a commercial item, such as a drink, under the control of the touch panel interface 63.

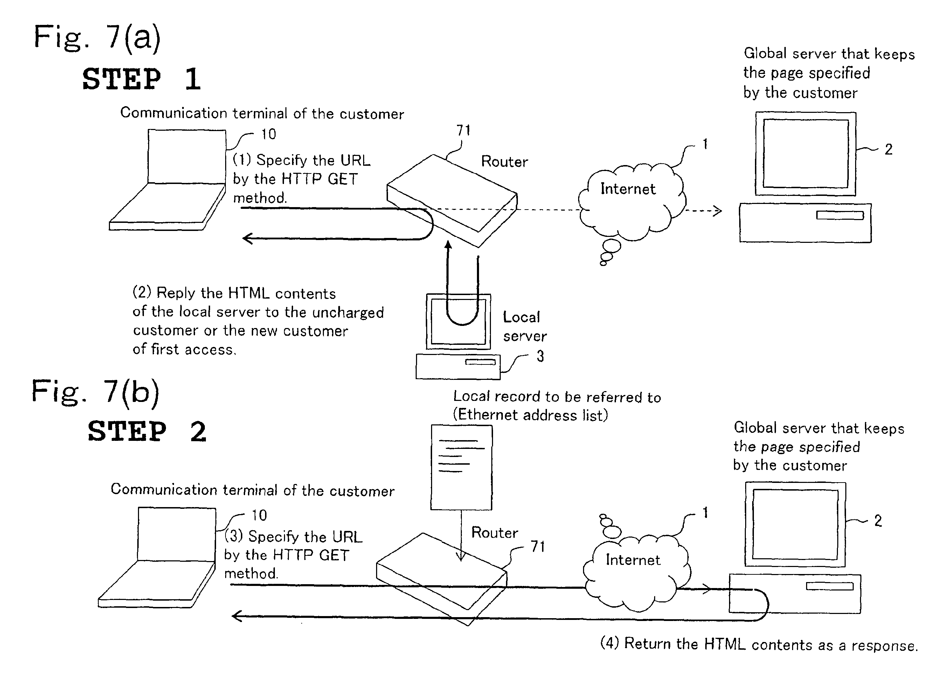

The method of ensuring display of a certain Web page specified by the local server 3 as the initial window on the browser of the communication terminal 10 is discussed below. Fig. 7 shows the method of causing a Web page of the local server 3 to be displayed as an initial window on the communication terminal 10.

The communication terminal 10 enters the coverage zone of the base station 4 and establishes connection with the local server 3. The customer activates the browser installed in the communication terminal 10 to display the contents of a desired URL. The browser tries to download the contents from the desired URL by the 'Method: GET' in conformity with the HTTP protocol as shown in Fig. 7(a).

In the general Internet connection service environment at the shops and commercial facilities, the 'IP packet' that transmits an HTTP requirement from the communication terminal 10 enters a router 71 and is transmitted to outside, since the IP address is dynamically and locally allocated to the communication terminal 10 according to the dynamic host configuration protocol (DHCP)

The router 71 detects the occurrence of a 'first external access' in the case where the communication terminal 10 has an unregistered Ethernet address. The router 71 connects with the local server 3 and replies the contents stored in the local server 3 as a response to the communication terminal 10, instead of the customer's desired contents.

As shown in Fig. 7(b), the Ethernet address allocated to the communication terminal 10 of the customer who has ordered a commercial item under the CGI control of the local contents, remains in the local record of the router 71. Next time the customer is permitted to normally gain access to the desired URL.

The Web page specified by the local server 3 is bound to be displayed on the communication terminal 10 as the initial window according to the procedure discussed above. By ordering a commercial item included in the Internet connection setting window, the customer can browse a desired Web page.

The above embodiment is to be considered in all aspects as illustrative and not restrictive. There may be many modifications, changes, and alterations without departing from the scope or spirit of the main characteristics of the present invention. All changes within the meaning and range of equivalency of the claims are therefore intended to be embraced therein. Some examples of possible modification are given below.

The functional blocks shown in Figs. 1 and 5 may be configured by separate program modules or by an integrated program module. All or part of these functional blocks may be constructed by the hardware structure including logic circuits. Each program module may be incorporated in an existing application program or may be operated as an independent program. The computer program for actualising the present invention may be recorded in a computer readable recording medium, such as a CD-ROM, and installed in the computer. The computer program may otherwise be downloaded into the memory of the computer via a network.

## Claims

1. A terminal connection service system for providing a service of connecting a communication terminal to the Internet without requiring the user to input an identification code,
the terminal connection service system comprising a local server that has a function of an Internet service provider and is adapted to deliver a specified Internet connection setting window as an initial window to a communication terminal, which is connectable with a network,
wherein the Internet connection setting is a menu window comprising a number of items for selection by a user, and the local server is adapted to effectuate a function of gaining access to the Internet following the selection of one or more of the number of items for selection included in the menu window, and the local server is adapted to automatically cancel the access of the communication terminal to the Internet when a preset time period elapses after a start of the access.

2. A terminal connection service system in accordance with claim 1. wherein the local server is connected with a base station of a wireless network having a coverage zone and the communication terminal is adapted to enter the coverage zone.

3. A terminal connection service system in accordance with claim 1, wherein the base station of the wireless network is provided in a shop and the local server is connected with a communication terminal placed in an area of the shop via the base station in the shop and is adapted to specify an original Internet connection setting window for the shop.

4. A terminal connection service system in accordance with any one of claims 1 to 3, wherein the Internet connection setting window includes specific advertisement information.

5. A terminal connection service system in accordance with any one of claims 1 to 4. wherein the Internet connection setting window includes an operation element to gain access to the Internet.

6. A terminal connection service system in accordance with claim 1, wherein the time of automatically cancelling the access of the communication terminal to the Internet depends upon a cost value of the one or more selected items.

7. A local server having a function of an Internet service provider for providing a service of connecting a communication terminal to the internet without requiring the user to input an identification code,
the local server adapted to deliver a specified Internet connection setting window as an initial window to a communication terminal, which is connectable with a network, wherein
the Internet connection setting window is a menu window comprising a number of items for selection by a user, and the local server is adapted to effectuate a function of gaining access to the Internet without requiring the user to input an identification code following to the selection of one or more of the number of items for selection included in the menu window, and the local server is adapted to automatically cancel the access of the communication terminal to the Internet when a preset time period elapses after a start of the access.

8. A local server in accordance with claim 7, wherein the local server is connected with a base station of a wireless network having a coverage zone and wherein the communication terminal is adapted to enter the coverage zone.

9. A local server in accordance with claim 8, wherein the base station of the wireless network is provided in a shop,
the local server being connected with a communication terminal placed in an area of the shop via the base station in the shop and is adapted to specify an original Internet connection setting window for the shop.

10. A local server in accordance with any one of claims 7 to 9, wherein the Internet connection setting window includes specific advertisement information.

11. A local server in accordance with any one of claims 7 to 10, wherein the Internet connection setting window includes an operation clement to gain access to the Internet.

12. A local sewer in accordance with claim 7, wherein the time of automatically cancelling the access of the communication terminal to the Internet depends upon a cost value of the one or more selected items.

13. A terminal connection method of connecting a communication terminal to the Internet without requiring a user to input an identification code,
the method of terminal connection service comprising the steps of:
providing a local server that has a function of an Internet service provider; and
controlling the local server to deliver a specified Internet connection setting window as an initial window to a communication terminal, which connects with a network, without requiring the user to input an identification code, wherein
the Internet connection setting window is a menu window comprising a number of items for selection by a user, and wherein
the method of terminal connection server further comprises the steps of:
effectuating a function of the local server to gain access to the Internet, following to the selection of one or more of the number of items for selection included in the menu window, and automatically cancelling the access of the communication terminal to the Internet when a preset time period elapses after a start of the access.

14. A method of terminal connection service in accordance with claim 13, wherein the local server is connected with a base station of a wireless network having a coverage zone and the communication terminal enters the coverage zone.

15. A method of terminal connection service in accordance with claim 14, the method further comprising the step of:
specifying an original Internet connection setting window for each shop, when the base station of the wireless network is provided in the shop and the local server is connected with a communication terminal placed in an area of the shop via the base station in the shop.

16. A method of terminal connection service in accordance with any one of claims 13 to 15, wherein the Internet connection setting window includes specific advertisement information.

17. A method of terminal connection service in accordance with any one of claims 13 to 16, wherein the Internet connection setting window includes an operation element to gain access to the Internet.

18. A method of terminal connection service in accordance with claim 13, wherein the time of automatically cancelling the access of the communication terminal to the Internet depends upon a cost value of the one or more selected items.

19. A computer readable recording medium, in which a computer program is recorded, the computer program being used for a local server that has a function of an Internet service provider for providing a service of connecting a communication terminal to the internet without requiring the user to input an identification code,
the computer program causing the local server to attain the function of:
delivering a specified Internet connection setting window as an initial window to a communication terminal, which connects with a network,
wherein the Internet connection setting window is a menu window comprising a number of items for selection by a user, and
the computer program further causes the local server to attain the function of:
effectuating a function of gaining access to the Internet without requiring a user to input an identification code, following to the selection of one or more of the number of items for selection included in the menu window, and automatically cancelling the access of the communication terminal to the Internet when a preset time period elapses after a start of the access.

20. A recording medium in accordance with claim 19, wherein the local server is connected with a base station of a wireless network having a coverage zone and the communication terminal enters the coverage zone.

21. A recording medium in accordance with claim 20, wherein the computer program further causes the local server to attain the function of:
specifying an original Internet connection setting window for each shop, when the base station of the wireless network is provided in the shop and the local server is connected with a communication terminal placed in an area of the shop via the base station in the shop.

22. A recording medium in accordance with any one of claims 19 to 21, wherein the Internet connection setting window includes specific advertisement information.

23. A recording medium in accordance with any one of claims 19 to 22, wherein the Internet connection setting window includes an operation element to gain access to the Internet.

24. A recording medium in accordance with claim 19, wherein the time of automatically cancelling the access of the communication torminal to the Internet depends upon a cost value of the one or more selected items.

## Patentansprüche

1. Terminal-Verbindungsdienstsystem zur Bereitstellung eines Dienstes für den Anschluss eines Kommunikationsterminals an das Internet, ohne Eingabe eines Identifizierungskodes durch den Benutzer zu erfordern,
wobei das Terminal-Verbindungsdienstsystem einen lokalen Server umfasst, der eine Funktion eines Internet-Dienstproviders hat und dazu ausgebildet ist, ein spezifiziertes Internet-Verbindungseinrichtungsfenster als Anfangsfenster an ein Kommunikationsterminal zu leiten, das mit einem Netzwerk verbunden werden kann,
wobei das Internet-Verbindungseinrichtungsfenster ein Menüfenster ist, das eine Reihe von Auswahlpunkten für einen Benutzer umfasst, und der lokale Server dazu ausgebildet ist, eine Funktion zum Erlangen eines Zugangs zu dem Internet auszuführen, nachdem einer oder mehrere der Anzahl von Auswahlpunkten gewählt wurden, die in dem Menüfenster enthalten sind, und der lokale Server dazu ausgebildet ist, automatisch den Zugang des Kommunikationsterminals zu dem Internet zu beenden, wenn eine voreingestellte Zeitperiode nach einem Start des Zugangs verstrichen ist.

2. Terminal-Verbindungsdienstsystem nach Anspruch 1, wobei der lokale Server an eine Basisstation eines drahtlosen Netzwerks mit einer Versorgungszone angeschlossen ist, und das Kommunikationsterminal dazu ausgebildet ist, in die Versorgungszone einzudringen.

3. Terminal-Verbindungsdienstsystem nach Anspruch 1, wobei die Basisstation des drahtlosen Netzwerkes in einem Geschäft bereitgestellt ist und der lokale Server mit einem Kommunikationsterminal, das sich in einem Bereich des Geschäfts befindet, über die Basisstation in dem Geschäft verbunden ist und dazu ausgebildet ist, ein Original-Internet-Verbindungseinrichtungsfenster für das Geschäft zu spezifizieren.

4. Terminal-Verbindungsdienstsystem nach einem der Ansprüche 1 bis 3, wobei das Internet-Verbindungseinrichtungsfenster spezifische Werbeinformationen enthält.

5. Terminal-Verbindungsdienstsystem nach einem der Ansprüche 1 bis 4, wobei das Internet-Verbindungseinrichtungsfenster ein Betriebselement enthält, um Zugang zu dem Internet zu erlangen.

6. Terminal-Verbindungsdienstsystem nach Anspruch 1, wobei der Zeitpunkt der automatischen Beendigung des Zugangs des Kommunikationsterminals zu dem Internet von einem Kostenwert des einen oder der mehreren gewählten Punkte abhängig ist.

7. Lokaler Server mit einer Funktion eines Internet-Dienstproviders zur Bereitstellung eines Dienstes für den Anschluss eines Kommunikationsterminals an das Internet, ohne Eingabe eines Identifizierungskodes durch den Benutzer zu erfordern,
wobei der lokale Server dazu ausgebildet ist, ein spezifiziertes Internet-Verbindungseinrichtungsfenster als Anfangsfenster an ein Kommunikationsterminal zu leiten, das mit einem Netzwerk verbunden werden kann, wobei
das Internet-Verbindungseinrichtungsfenster ein Menüfenster ist, das eine Reihe von Auswahlpunkten für einen Benutzer umfasst, und der lokale Server dazu ausgebildet ist, eine Funktion zum Erlangen eines Zugangs zu dem Internet auszuführen, ohne Eingabe eines Identifizierungskodes durch den Benutzer zu erfordern, nachdem einer oder mehrere der Anzahl von Auswahlpunkten gewählt wurden, die in dem Menüfenster enthalten sind, und der lokale Server dazu ausgebildet ist, automatisch den Zugang des Kommunikationsterminals zu dem Internet zu beenden, wenn eine voreingestellte Zeitperiode nach einem Start des Zugangs verstrichen ist.

8. Lokaler Server nach Anspruch 7, wobei der lokale Server an eine Basisstation eines drahtlosen Netzwerks mit einer Versorgungszone angeschlossen ist, und wobei das Kommunikationsterminal dazu ausgebildet ist, in die Versorgungszone einzudringen.

9. Lokaler Server nach Anspruch 8, wobei die Basisstation des drahtlosen Netzwerkes in einem Geschäft bereitgestellt ist,
der lokale Server mit einem Kommunikationsterminal, das sich in einem Bereich des Geschäfts befindet, über die Basisstation in dem Geschäft verbunden ist und dazu ausgebildet ist, ein Original-Internet-Verbindungseinrichtungsfenster für das Geschäft zu spezifizieren.

10. Lokaler Server nach einem der Ansprüche 7 bis 9, wobei das Internet-Verbindungseinrichtungsfenster spezifische Werbeinformationen enthält.

11. Lokaler Server nach einem der Ansprüche 7 bis 10, wobei das Internet-Verbindungseinrichtungsfenster ein Betriebselement enthält, um Zugang zu dem Internet zu erlangen.

12. Lokaler Server nach Anspruch 7, wobei der Zeitpunkt der automatischen Beendigung des Zugangs des Kommunikationsterminals zu dem Internet von einem Kostenwert des einen oder der mehreren gewählten Punkte abhängig ist.

13. Terminal-Verbindungsverfahren zum Anschließen eines Kommunikationsterminals an das Internet, ohne Eingabe eines Identifizierungskodes durch den Benutzer zu erfordern,
wobei das Terminal-Verbindungsverfahren folgende Schritte umfasst:
Bereitstellen eines lokalen Servers, der eine Funktion eines Internet-Dienstproviders hat; und
Kontrollieren des lokalen Servers, um ein spezifiziertes Internet-Verbindungseinrichtungsfenster als Anfangsfenster an ein Kommunikationsterminal zu leiten, das mit einem Netzwerk verbunden ist, ohne Eingabe eines Identifizierungskodes durch den Benutzer zu erfordern, wobei
das Internet-Verbindungseinrichtungsfenster ein Menüfenster ist, das eine Reihe von Auswahlpunkten für einen Benutzer umfasst, und wobei
das Terminal-Verbindungsdienstverfahren des Weiteren folgende Schritte umfasst:
Ausführen einer Funktion des lokalen Servers, um Zugang zu dem Internet zu erlangen, nachdem einer oder mehrere der Anzahl von Auswahlpunkten gewählt wurden, die in dem Menüfenster enthalten sind, und automatisches Beenden des Zugangs des Kommunikationsterminals zu dem Internet, wenn eine voreingestellte Zeitperiode nach einem Start des Zugangs verstrichen ist.

14. Terminal-Verbindungsdienstverfahren nach Anspruch 13, wobei der lokale Server an eine Basisstation eines drahtlosen Netzwerks mit einer Versorgungszone angeschlossen ist, und das Kommunikationsterminal in die Versorgungszone eindringt.

15. Terminal-Verbindungsdienstverfahren nach Anspruch 14, wobei das Verfahren des Weiteren folgende Schritte umfasst:
Spezifizieren eines Original-Internet-Verbindungseinrichtungsfenster für jedes Geschäft, wenn die Basisstation des drahtlosen Netzwerkes in einem Geschäft bereitgestellt ist und der lokale Server mit einem Kommunikationsterminal, das sich in einem Bereich des Geschäfts befindet, über die Basisstation in dem Geschäft verbunden ist.

16. Terminal-Verbindungsdienstverfahren nach einem der Ansprüche 13 bis 15, wobei das Internet-Verbindungseinrichtungsfenster spezifische Werbeinformationen enthält.

17. Terminal-Verbindungsdienstverfahren nach einem der Ansprüche 13 bis 16, wobei das Internet-Verbindungseinrichtungsfenster ein Betriebselement enthält, um Zugang zu dem Internet zu erlangen.

18. Terminal-Verbindungsdienstverfahren nach Anspruch 13, wobei der Zeitpunkt der automatischen Beendigung des Zugangs des Kommunikationsterminals zu dem Internet von einem Kostenwert des einen oder der mehreren gewählten Punkte abhängig ist.

19. Computerlesbares Aufzeichnungsmedium, in dem ein Computerprogramm aufgezeichnet ist, wobei das Computerprogramm für einen lokalen Server verwendet wird, der eine Funktion eines Internet-Dienstproviders hat, zur Bereitstellung eines Dienstes für den Anschluss eines Kommunikationsterminals an das Internet, ohne Eingabe eines Identifizierungskodes durch den Benutzer zu erfordern,
wobei das Computerprogramm bewirkt, dass der lokale Server folgende Funktion erlangt:
Leiten eines spezifizierten Internet-Verbindungseinrichtungsfensters als Anfangsfenster an ein Kommunikationsterminal, das mit einem Netzwerk verbunden ist,
wobei das Internet-Verbindungseinrichtungsfenster ein Menüfenster ist, das eine Reihe von Auswahlpunkten für einen Benutzer umfasst, und
das Computerprogramm des Weiteren d bewirkt, dass der lokale Server folgende Funktion erlangt:
Ausführen einer Funktion zum Erlangen eines Zugangs zu dem Internet, ohne Eingabe eines Identifizierungskodes durch den Benutzer zu erfordern, nachdem einer oder mehrere der Anzahl von Auswahlpunkten gewählt wurden, die in dem Menüfenster enthalten sind, und automatisches Beenden des Zugangs des Kommunikationsterminals zu dem Internet, wenn eine voreingestellte Zeitperiode nach einem Start des Zugangs verstrichen ist.

20. Aufzeichnungsmedium nach Anspruch 19, wobei der lokale Server an eine Basisstation eines drahtlosen Netzwerks mit einer Versorgungszone angeschlossen ist, und das Kommunikationsterminal in die Versorgungszone eindringt.

21. Aufzeichnungsmedium nach Anspruch 20, wobei das Computerprogramm des Weiteren bewirkt, dass der lokale Server folgende Funktion erlangt:
Spezifizieren eines Original-Internet-Verbindungseinrichtungsfensters für jedes Geschäft, wenn die Basisstation des drahtlosen Netzwerkes in einem Geschäft bereitgestellt ist und der lokale Server mit einem Kommunikationsterminal, das sich in einem Bereich des Geschäfts befindet, über die Basisstation in dem Geschäft verbunden ist.

22. Aufzeichnungsmedium nach einem der Ansprüche 19 bis 21, wobei das Internet-Verbindungseinrichtungsfenster spezifische Werbeinformationen enthält.

23. Aufzeichnungsmedium nach einem der Ansprüche 19 bis 22, wobei das Internet-Verbindungseinrichtungsfenster ein Betriebselement enthält, um Zugang zu dem Internet zu erlangen.

24. Aufzeichnungsmedium nach Anspruch 19, wobei der Zeitpunkt der automatischen Beendigung des Zugangs des Kommunikationsterminals zu dem Internet von einem Kostenwert des einen oder der mehreren Auswahlpunkte abhängig ist.

## Revendications

1. Système de service de connexion de terminal pour fournir un service consistant à connecter un terminal de communication à Internet sans obligation pour l'utilisateur de saisir un code d'indentification,
le système de service de connexion de terminal comprenant un serveur local exerçant une fonction de fournisseur de service Internet et étant adapté pour délivrer une fenêtre de configuration de connexion à Internet spécifiée en tant que fenêtre initiale pour un terminal de communication, lequel peut être connecté à un réseau,
la fenêtre de configuration de connexion à Internet étant une fenêtre de menu comprenant un certain nombre de rubriques pour la sélection par un utilisateur, et le serveur local étant adapté pour exercer une fonction d'accès à Internet après la sélection d'une ou plusieurs des rubriques de sélection inclues dans la fenêtre de menu, et le serveur local étant adapté pour automatiquement annuler l'accès du terminal de communication à Internet lorsqu'une période de temps réglée à l'avance s'écoule après le début de l'accès.

2. Système de service de connexion de terminal selon la revendication 1, où le serveur local est connecté à une station de base d'un réseau sans fil possédant une zone de couverture, et où le terminal de communication est adapté pour entrer dans la zone de couverture.

3. Système de service de connexion de terminal selon la revendication 1, où la station de base du réseau sans fil est fournie dans un magasin, et où le serveur local est connecté à un terminal de communication situé dans une zone du magasin via la station de base dans le magasin et est adapté pour spécifier une fenêtre de configuration de connexion à Internet d'origine pour le magasin.

4. Système de service de connexion de terminal selon l'une quelconque des revendications 1 à 3, où la fenêtre de configuration de connexion à Internet comprend de l'information publicitaire spécifique.

5. Système de service de connexion de terminal selon l'une quelconque des revendications 1 à 4, où la fenêtre de configuration de connexion à Internet comprend un élément opératif pour accéder à Internet.

6. Système de service de connexion de terminal selon la revendication 1, où le temps d'annulation automatique de l'accès du terminal de communication à Internet dépend d'une valeur de coût de l'une ou plusieurs rubriques sélectionnées.

7. Serveur local exerçant la fonction de fournisseur de service Internet pour offrir un service consistant à connecter un terminal de communication à Internet sans obligation pour l'utilisateur de saisir un code d'indentification,
le serveur local étant adapté pour délivrer une fenêtre de configuration de connexion à Internet spécifiée en tant que fenêtre initiale pour un terminal de communication, lequel peut être connecté à un réseau,
la fenêtre de configuration de connexion à Internet étant une fenêtre de menu comprenant un certain nombre de rubriques à sélectionner par un utilisateur, et le serveur local étant adapté pour réaliser une fonction d'accès à Internet sans nécessité pour l'utilisateur de saisir un code d'identification après la sélection d'une ou plusieurs rubriques de sélection inclues dans la fenêtre de menu, et le serveur local étant adapté pour automatiquement annuler l'accès du terminal de communication à Internet lorsqu'une période de temps préréglée s'écoule après le début de l'accès.

8. Serveur local selon la revendication 7, le serveur local étant connecté à une station de base d'un réseau sans fil possédant une zone de couverture, et le terminal de communication étant adapté pour entrer dans la zone de couverture.

9. Serveur local selon la revendication 8, la station de base du réseau sans fil étant fournie dans un magasin, le serveur local étant connecté avec un terminal de communication situé dans une zone du magasin via la station de base dans le magasin, et étant adapté pour spécifier une fenêtre de configuration de connexion à Internet d'origine pour le magasin.

10. Serveur local selon l'une quelconque des revendications 7 à 9, la fenêtre de configuration de connexion à Internet comprenant de l'information publicitaire spécifiée.

11. Serveur local selon l'une quelconque des revendications 7 à 10, la fenêtre de configuration de connexion à Internet comprenant un élément opératif pour accéder à Internet.

12. Serveur local selon la revendication 7, où le temps pour annuler automatiquement l'accès du terminal de communication à Internet dépend d'une valeur de coût de l'une ou plusieurs des rubriques.

13. Procédé de connexion d'un terminal consistant à connecter un terminal de communication à Internet sans nécessité pour un utilisateur de saisir un code d'identification,
le procédé du service de connexion d'un terminal comprenant les étapes suivantes :
fourniture d'un serveur local qui exerce une fonction de fournisseur de service Internet ; et
contrôle du serveur local afin de délivrer une fenêtre de configuration de connexion à Internet spécifiée en tant que fenêtre initiale pour un terminal de communication, lequel se connecte à un réseau, sans nécessité pour l'utilisateur de saisir un code d'identification,
la fenêtre de configuration de connexion à Internet étant une fenêtre de menu comprenant un certain nombre de rubriques à sélectionner par un utilisateur, et
le procédé du serveur de connexion de terminal comprenant en outre les étapes suivantes :
réalisation d'une fonction du serveur local pour accéder à Internet après la sélection d'une ou plusieurs rubriques à sélectionner inclues dans la fenêtre de menu, et annulation automatique de l'accès du terminal de communication à Internet lorsqu'une période de temps préréglée s'écoule après un début de l'accès.

14. Procédé de service de connexion de terminal selon la revendication 13, où le serveur local est connecté à une station de base d'un réseau sans fil possédant une zone de couverture, et où le terminal de communication entre dans la zone de couverture.

15. Procédé de service de connexion de terminal selon la revendication 14, le procédé comprenant par ailleurs les étapes suivantes :
spécification d'une fenêtre de configuration de connexion à Internet d'origine pour chaque magasin, lorsque la station de base du réseau sans fil est fournie dans le magasin et que le serveur local est connecté à un terminal de communication situé dans une zone du magasin via la station de base dans le
magasin.

16. Procédé de service de connexion de terminal selon l'une quelconque des revendications 13 à 15, la fenêtre de configuration de connexion à Internet comprenant de l'information publicitaire spécifique.

17. Procédé de service de connexion de terminal selon l'une quelconque des revendications 13 à 16, la fenêtre de configuration de connexion à Internet incluant un élément opératif pour accéder à Internet.

18. Procédé de service de connexion de terminal selon la revendication 13, le temps pour automatiquement annuler l'accès du terminal de communication à Internet dépendant d'une valeur de coût d'une ou plusieurs rubriques sélectionnées.

19. Support d'enregistrement pouvant être lu par un ordinateur, sur lequel un programme informatique est enregistré, le programme informatique étant utilisé pour un serveur local qui exerce la fonction d'un fournisseur de service Internet pour offrir un service consistant à connecter un terminal de communication à Internet sans nécessité pour l'utilisateur de saisir un code d'identification,
le programme informatique faisant en sorte que le serveur local exerce la fonction :
délivrance d'une fenêtre de configuration de connexion à Internet spécifiée en tant que fenêtre initiale à l'attention d'un terminal de communication, lequel se connecte à un réseau,
la fenêtre de configuration de connexion à Internet étant une fenêtre de menu comprenant un certain nombre de rubriques à sélectionner par un utilisateur, et
le programme informatique faisant également en sorte que le serveur local exerce la fonction de :
réalisation d'une fonction d'accès à Internet sans nécessité pour un utilisateur de saisir un code d'identification après la sélection de l'une ou plusieurs des rubriques de sélection inclues dans la fenêtre de menu, et d'annulation automatique de l'accès du terminal de communication à Internet lorsqu'une période de temps préréglée s'écoule après un début de l'accès.

20. Support d'enregistrement selon la revendication 19, où le serveur local est connecté via une station de base à un réseau sans fil possédant une zone de couverture, et où le terminal de communication entre dans la zone de couverture.

21. Support d'enregistrement selon la revendication 20, où le programme informatique fait en sorte que le serveur local exerce la fonction de :
spécification d'une fenêtre de configuration de connexion à Internet d'origine pour chaque magasin, lorsque la station de base du réseau sans fil est fournie dans le magasin et que le serveur local est connecté avec un terminal de communication situé dans une zone du magasin via la station de base dans le magasin.

22. Support d'enregistrement selon l'une quelconque des revendications 19 à 21, où la fenêtre de configuration de connexion à Internet comprend de l'information publicitaire spécifique.

23. Support d'enregistrement selon l'une quelconque des revendications 19 à 22, où la fenêtre de configuration de connexion à Internet comprend un élément opératif pour accéder à Internet.

24. Support d'enregistrement selon la revendication 19, où le temps d'annulation automatique de l'accès du terminal de communication à Internet dépend de la valeur de coût d'une ou plusieurs rubriques sélectionnées.
